Europäisches Patentamt

(19) European Patent Office

Office européen des brevets

(11) Numéro de publication : **0 213 043**
**B1**

(12) **FASCICULE DE BREVET EUROPÉEN**

(45) Date de publication du fascicule du brevet :
**11.01.89**

(21) Numéro de dépôt : **86401799.1**

(22) Date de dépôt : **12.08.86**

(51) Int. Cl.⁴ : **B 60 K 5/12**, F 16 F 3/08

(54) Support élastique, notamment pour moteur à combustion interne de véhicule à limiteur de débattement.

(30) Priorité : **13.08.85 FR 8512341**

(43) Date de publication de la demande :
**04.03.87 Bulletin 87/10**

(45) Mention de la délivrance du brevet :
**11.01.89 Bulletin 89/02**

(84) Etats contractants désignés :
**DE GB IT NL SE**

(56) Documents cités :
**EP--A-- 0 042 068**
**EP--A-- 0 073 299**
**DE--B-- 1 095 063**
**FR--A-- 1 391 487**
**FR--A-- 2 340 834**
**US--A-- 1 703 297**
**US--A-- 1 739 025**
**US--A-- 1 817 771**
**US--A-- 2 156 301**

(73) Titulaire : **HUTCHINSON**
**2 rue Balzac**
**F-75008 Paris (FR)**

(72) Inventeur : **Pierrat, Jacques**
**30 Bis, rue des Bois**
**F-75019 Paris (FR)**

(74) Mandataire : **Picard, Jean-Claude Georges et al**
**Cabinet Plasseraud 84, rue d'Amsterdam**
**F-75009 Paris (FR)**

Jouve, 18, rue St-Denis, 75001 Paris, France

## Description

La présente invention concerne un support élastique, notamment pour moteur à combustion interne de véhicule, du type comportant essentiellement un système élastique principal propre à travailler en compression et en traction et inséré entre deux pièces de liaison, l'une adaptée à être fixée au châssis du véhicule, l'autre à être fixée au moteur, un limiteur de débattement propre à travailler en traction et constitué par au moins un anneau armé de fils résistants, enrobé par une gaine de caoutchouc, reliant les deux dites pièces.

Les impératifs de sécurité obligent les constructeurs à prévoir des limitations des débattements au niveau, notamment, des supports élastiques des moteurs à combustion interne.

Les limiteurs mécaniques classiques, qui sont constitués d'une armature en acier supplémentaire, engendrent des réactions brutales en cas de débattements exceptionnels, comme c'est le cas selon le document DE-B-1 095 063.

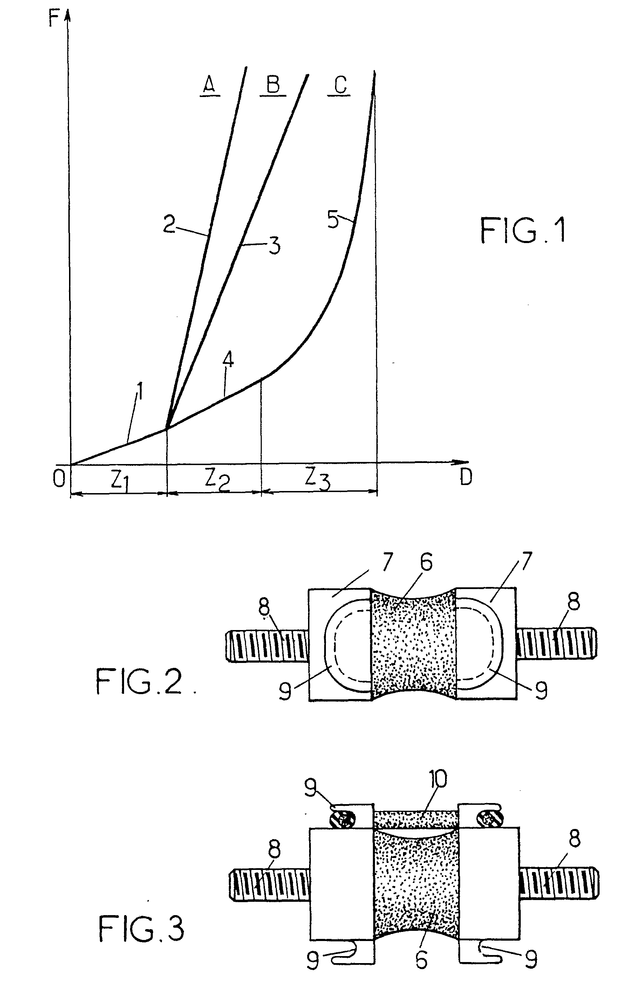

Sur la figure 1 du dessin ci-annexé, la courbe A montre l'évolution des efforts F s'appliquant sur le support, en fonction des déplacements D de la pièce de liaison au moteur. Dans la zone Z1, le segment 1 représente la zone d'élasticité à faible pente du système élastique principal du support. On voit qu'à partir de ce point, la courbe A fait un coude, le segment 1 étant suivi d'un segment 2 à beaucoup plus forte pente, ce qui traduit une mise en action brutale du limiteur mécanique.

Quant au segment 3 qui s'étend à partir de ce coude et qui appartient à la courbe B, il montre l'intervention d'un limiteur de débattements également classique, mais du type à câble d'acier tressé. On voit que sa pente est inférieure à celle du segment 2, mais le coude 1-3 traduit là aussi une certaine brutalité de la mise en action du limiteur. Il en résulte des vibrations excessives transmises au châssis, et une moins grande longévité des supports élastiques.

Le but de la présente invention est de remédier à ces inconvénients de la technique antérieure, et d'obtenir une plus grande progressivité de la mise en action du limiteur sur ce type de supports élastiques.

A cet effet, un support élastique du type général défini au début sera, conformément à la présente invention, essentiellement caractérisé en ce que l'anneau présente, au moins au niveau de ses parties intérieures qui auront à entrer en contact avec les pièces de liaison, des bourrelets en saillie à la fois latéralement, sur les deux faces de l'anneau, et radialement, vers l'intérieur de l'anneau.

Lesdits fils pourront être tressés, mais cela n'est pas obligatoire. Leur nombre, leur section, le matériau dont ils sont constitués et leur tension initiale seront choisis en fonction de la courbe souhaitée d'intervention du limiteur. On pourra choisir par exemple des fils en rayonne, en verre, en kevlar, en carbone, etc. et d'une façon générale en tout matériau dont le module d'élasticité est compatible avec la courbe de réponse souhaitée.

Ces fils seront avantageusement enduits d'un adhésif propre à les solidariser, avant enrobage dans la gaine de caoutchouc.

Cette gaine pourra être en caoutchouc naturel ou synthétique. L'un de ses rôles est de protéger les fils en empêchant qu'ils entrent en contact avec les pièces de liaison métalliques du support, ce qui pourrait les cisailler. Un autre rôle fondamental de cette gaine de caoutchouc est d'intervenir dans la courbe de réponse du dispositif, en rendant très progressive (sans les coudes 1-2 et 1-3 de la courbe des dispositifs connus) le passage de l'action du système élastique principal du support, à l'action des fils résistants du limiteur de débattement. En d'autres termes, cette gaine de caoutchouc a pour rôle de gommer le coude des courbes de réponse des supports élastiques connus. L'épaisseur de cette gaine, notamment au niveau des parties intérieures de l'anneau qui auront à entrer en contact avec les pièces de liaison, sera choisie essentiellement en fonction de ce rôle important confié à la gaine.

C'est pour augmenter cet effet que l'invention prévoit dans l'anneau, au moins au niveau de ses parties intérieures qui auront à entrer en contact avec les pièces de liaison, les bourrelets en saillie à la fois latéralement, sur les deux faces de l'anneau, et radialement, vers l'intérieur de l'anneau.

Ces bourrelets ont pour avantages :

1) d'empêcher efficacement tout contact direct entre les fils de l'anneau et les gorges des pièces de liaison, ce qui, comme déjà indiqué plus haut, empêchera les fils d'être cisaillés, et garantira donc la longévité du limiteur ;

2) de positionner, dans le moule utilisé pour la fabrication de l'anneau, les nattes ou écheveaux de fils, en assurant qu'ils soient totalement enrobés par le caoutchouc, notamment vers l'intérieur de l'anneau et sur ses faces latérales ;

3) de régler, par le choix de leur épaisseur, et comme indiqué plus haut, le degré d'intervention de la gaine de caoutchouc dans l'élasticité de l'ensemble du support, à la transition entre l'action du système élastique principal (bloc d'élastomère ou analogue), et l'action du faisceau de fils résistants de l'anneau.

Sur la figure 1 déjà citée, on a montré par la courbe C de quelle façon l'élasticité de cette gaine de l'anneau pouvait intervenir (segment 4 de la zone Z2) pour rendre très progressif le passage du segment 1 (élasticité du système élastique principal), à la courbe 5 (élasticité des fils résistants de l'anneau dans la zone Z3).

On voit que la progressivité est excellente, le segment 4 ayant une pente légèrement supérieure à celle du segment 1 et assurant une transition très douce vers le début de la courbe 5. La courbe C, constituée des parties 1, 4 et 5 ne comporte plus aucun coude, ce qui résout parfaitement le problème posé.

Les autres figures du dessin ci-annexé montrent un exemple de réalisation d'un support élastique conforme à la présente invention :

- la figure 2 est une vue de côté du support,
- la figure 3 est une vue de face de ce support,
- la figure 4 représente l'anneau au repos,
- la figure 5 montre l'anneau en état d'extension, prêt à être monté sur le support, et
- la figure 6 est une vue en coupe transversale de l'anneau, montrant la répartition du caoutchouc des bourrelets.

Sur les figures 2 et 3, on a référencé en 6 le système élastique principal du support, constitué par exemple par un bloc de caoutchouc adhérisé entre deux pièces métalliques ou armatures 7 de liaison, d'une part au moteur, d'autre part au châssis du véhicule. Des goujons 8 permettent d'assurer les fixations voulues. Sur deux côtés opposés, les pièces 7 sont pourvues de gorges 9 grâce auxquelles l'anneau 10 du limiteur pourra être maintenu en traction.

La figure 3 montre que le support n'est équipé que d'un anneau 10, deux des quatre gorges 9 étant inoccupées, mais il est bien entendu qu'il pourrait être équipé symétriquement de deux anneaux 10.

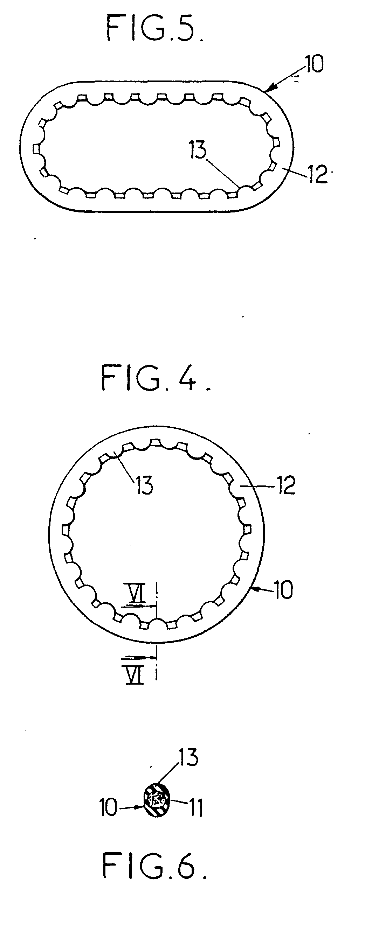

Sur les figures 4 à 6, on a montré les différentes parties constitutives de l'anneau 10 : cet anneau, qui constitue le limiteur de débattement du support, contient un faisceau de fils résistants 11, par exemple en rayonne, solidarisés par un adhésif. Ce faisceau est enrobé par une gaine de caoutchouc 12. On voit que cet anneau 10 présente, au moins au niveau de ses parties intérieures qui auront à entrer en contact avec les pièces 7 de liaison, des bourrelets 13 en saillie à la fois latéralement, sur les deux faces de l'anneau, et radialement, vers l'intérieur de l'anneau.

## Revendications

1. Support élastique, notamment pour moteur à combustion interne de véhicule, du type comportant essentiellement un système élastique principal (6) propre à travailler en compression et en traction et inséré entre deux pièces (7) de liaison, l'une adaptée à être fixée au châssis du véhicule, l'autre à être fixée au moteur, un limiteur de débattement propre à travailler en traction et constitué par au moins un anneau (10) armé de fils résistants (11), enrobé par une gaine de caoutchouc (12), reliant les deux dites pièces (7), caractérisé en ce que l'anneau (10) présente, au moins au niveau de ses parties intérieures qui auront à entrer en contact avec les pièces (7) de liaison, des bourrelets (13) en saillie à la fois latéralement, sur les deux faces de l'anneau, et radialement, vers l'intérieur de l'anneau.

2. Support selon la revendication 1, caractérisé en ce que lesdites pièces de liaison (7) comportent des gorges (9) pour la réception de l'anneau correspondant (10).

## Claims

1. An elastic support, especially for a vehicle internal combustion engine, of the type essentially comprising a main elastic system (6) suitable for operating under compression and tension and inserted between two connecting pieces (7), the one being adapted to be fixed to the chassis of the vehicle, the other to be fixed to the motor, a displacement limiter suitable for operating under tension and consisting of at least one ring (10) reinforced with resistant wires (11), coated with a rubber sheath (12), connecting the said two pieces (7), characterized in that the ring (10) has, at least at the level of its inner parts which have to enter into contact with the connecting pieces (7), enlargements (13) projecting both laterally, on the two faces of the ring, and radially, towards the inside of the ring.

2. A support according to claim 1, characterized in that said connecting pieces (7) comprise grooves (9) to receive the corresponding ring (10).

## Patentansprüche

1. Elastisches Lager mit Anschlag, insbesondere für Verbrennungsmotoren für Fahrzeuge, das aus folgenden Teilen besteht : einem elastischen Hauptsystem (6), das auf Druck- und Zugbeanspruchung arbeitet und zwischen zwei Verbindungsstücken (7) angeordnet ist, von denen das eine am Chassis des Fahrzeuges und das andere am Motor befestigt wird, einer Einrichtung zur Begrenzung der Schwingungen, die auf Zug arbeitet und aus wenigstens einem Ring (10) gebildet ist, der durch widerstandsfähige Drähte (11) verstärkt und von einer Schicht aus Gummi (12) umhüllt ist und der die beiden Werkstücke (7) verbindet, dadurch gekennzeichnet, daß der Ring (10) wenigstens in Höhe seiner inneren Abschnitte, die in Kontakt mit den Verbindungsteilen (7) kommen, mit Wülsten (13) versehen ist, die gleichzeitig seitlich gegenüber den beiden Flächen des Ringes und radial zum Inneren des Ringes vorstehen.

2. Elastisches Lager nach Anspruch 1, dadurch gekennzeichnet, daß die Verbindungsstücke (7) mit Rinnen (9) zur Aufnahme eines Ringes (10) versehen sind.

FIG.1

FIG.2.

FIG.3

# FIG.5.

# FIG. 4.

# FIG.6.